# EUROPEAN PATENT SPECIFICATION

(11) **EP 4 122 685 B1**
(45) Date of publication and mention of the grant of the patent: **27.12.2023**
(21) Application number: 21187514.1
(22) Date of filing: 23.07.2021
(51) Int. Cl.: B29C 70/44, H05B 6/10, B29C 35/08, H05B 6/36

(54) **MOLDING TOOL, METHOD OF MANUFACTURING THE SAME AND METHOD OF PRODUCING A COMPOSITE PART IN SAID TOOL**
FORMWERKZEUG, VERFAHREN ZUR HERSTELLUNG DAVON UND VERFAHREN ZUR HERSTELLUNG EINES VERBUNDTEILS IN BESAGTEM WERKZEUG
OUTIL DE MOULAGE, SON PROCÉDÉ DE FABRICATION ET PROCÉDÉ DE PRODUCTION D'UNE PIÈCE COMPOSITE DANS LEDIT OUTIL

(43) Date of publication of application: 25.01.2023
(73) Proprietor: Corebon AB, 213 76 Malmö (SE)
(72) Inventor: FROGNER, Kenneth, 242 92 HÖRBY (SE); Kjellstrand, Rasmus, 216 20 Malmö (SE); Siesing, Leif, 227 62 LUND (SE)
(74) Representative: Ström & Gulliksson AB

(56) References cited:
- EP-A2- 0 743 165
- WO-A2-2012/131112
- US-A- 2 048 450
- US-A1- 2009 115 104
- US-A1- 2010 258 556
- US-A1- 2014 023 828

## Description

### FIELD OF THE INVENTION

The present invention relates to a molding tool for producing a composite part using induction heating, a method of manufacturing the molding tool, and a method of producing a composite part with the tool.

### BACKGROUND

Over the past years, there has been an increasing interest in the use of lightweight materials in for instance the automotive and aerospace industry, where the main goal has been to reduce carbon emissions during transportation. For instance, it has been increasingly common that the vehicle or aircraft components are made of fiber composites.

When producing a part, such as a car door or an aircraft component, it is important to have a controlled heating and ensure an even heat distribution throughout relevant areas of the part. There are several examples of molding tools for composite manufacturing in the prior art which all have different drawbacks. For instance, they suffer from large thermal mass to be heated up and cooled down, which means long cycle times and high energy consumption. Another common problem is uneven heating, which affects part performance and yield negatively. Large physical space demand and high capex investments are other common challenges with existing solutions as well as limitations in size or temperature.

Common heat sources are ovens, and heated autoclaves, heat cartridges, resistance wires, IR-lamps, all with their pros and cons. Environmental aspects are another important topic with certain energy sources, such as hot oil and high pressurized steam technologies.

Examples of composite production processes which typically uses the heat sources described and which suffer from the above-mentioned drawbacks are resin transfer molding and compression molding, normally used inside some type of press to keep two mold halves together. Other examples are vacuum infusion, vacuum bagging,

and autoclave processing, where one of the mold halves is usually replaced by a flexible membrane or bag, or where the mold halves are pushed together by a pressure difference between the inside and the outside of the mold.

Prior art solutions are shown in WO2012/13112, EP0743165, and US2009/115104.

Hence, there is a need for improved molding tools for manufacturing of composite parts, which allows for short cycle times, are energy efficient and result in a high quality and yield, to enable cost efficient volume production.

### SUMMARY OF THE INVENTION

An object of the present invention is to solve or at least mitigate the problems related to prior art. This object is achieved by means of the technique set forth in the appended independent claims; preferred embodiments being defined in the related dependent claims.

According to an aspect of the invention, a molding tool for producing a composite part using induction heating is provided. The molding tool comprises:
a mold with a contact surface adapted to be in contact with a material to be transformed into a composite part, and an outer surface;
at least one main coil arranged in a meander-like pattern on the outer surface of the mold, such that an alternating electric current flowing through the at least one main coil is to its major extent directed in, alternatingly, opposite directions over the outer surface of the mold following the meander-like pattern, wherein the magnetic field generated by the current is configured to induce currents in at least parts of the mold to be heated; and at least one perimeter coil arranged on the outer surface of the mold and configured to delimit at least one area of the mold to be inductively heated. The mold is configured to be inductively heated by the at least one main coil and the at least one perimeter coil.

The at least one main coil and the at least one perimeter coil comprise litz wires which are electrically insulated from the mold and in operative communication with at least one processing means.

The magnetic field is preferably generated by currents flowing through both the at least one main coil and the at least one perimeter coil, and is configured to induce currents in at least parts of the mold to be heated.

In an embodiment, an alternating electric current is flowing through the at least one main coil which is to at least 85% directed in, alternatingly, opposite directions over the outer surface of the mold. In one embodiment, an alternating electric current flowing through the at least one main coil is substantially directed in, alternatingly, opposite directions over the outer surface of the mold. In one embodiment, the term major extent is to be seen as to a large extent.

In an embodiment, the at least one main coil and the at least one perimeter coil may be attached to the mold by an adhesive element.

In an embodiment, the at least one main coil and the at least one perimeter coil may be attached to the outer surface of the mold via a separate backing structure. The backing structure may be offset from the mold.

In an embodiment, each coil may be connected to a source of high frequency electric current, and the coils can be supplied by the same or by different sources. Preferably, the high frequency electric current source is a frequency converter.

In an embodiment, the mold can be either a shell tool or a solid tool. both types are commonly used in fiber composite processing. A mold can have virtually any shape, and contain any number of cavities. A shell tool is preferably suitable to be used for production of large parts or when deep cavities are required, due to its low weight.

At least parts of the molding tool may be electrically conductive to be able to be heated by induction. The mold is at least partially made of a material chosen from a group consisting of carbon fiber composite materials or metals.

An advantage of having a molding tool made from Invar is that it has a low coefficient of thermal expansion and long tool life.

Moreover, an advantage of having a molding tool made from nickel is that it can be manufactured into a lightweight shell tool with good surface quality on the contact surface using additive methods and with long service life.

Moreover, an advantage of having a molding tool made from aluminum and steel is that there are many suppliers, relatively low cost and long service life.

Moreover, an advantage of having a molding tool made from carbon fiber composite is that it can be manufactured into a lightweight shell tool, including large and complex geometries with additive methods, being relatively cost efficient and having a low coefficient of thermal expansion.

In an embodiment, the molding tool comprises at least a soft magnetic element and/or at least an electrically conductive element arranged at predetermined regions along the at least one main coil and/or the at least one perimeter coil. An advantage of arranging soft magnetic elements and electrically conductive elements along the coils is that a more even or desired heat distribution can be achieved and components or areas sensitive to high temperatures can be shielded, to avoid or reduce undesired heating.

According to another aspect of the invention, a method of manufacturing a molding tool is provided. The method comprises a step of providing a mold configured to be inductively heated, having a contact surface and an outer surface. Furthermore, the method comprises providing at least one main coil and at least one perimeter coil. The method further comprises arranging the at least one main coil in a meander-like pattern on the outer surface of the mold, such that an alternating electric current flowing through the at least one main coil is to its major extent directed in, alternatingly, opposite directions over the outer surface of the mold, following the meander-like pattern, wherein the magnetic field generated by the current is configured to induce currents in at least parts of the mold to be heated. Moreover, the method comprises arranging the at least one perimeter coil on the outer surface of the mold, such that it delimits at least one area of the mold to be inductively heated. The at least one main coil and the at least one perimeter coil comprise litz wires which are electrically insulated from the mold, and in operative communication with at least one processing means.

In an embodiment, the method of manufacturing a molding tool may further comprise attaching the at least one main coil and the at least one perimeter coil to the outer surface of the mold via an adhesive element or via a backing structure.

In yet an embodiment, the method of manufacturing a molding tool may further comprise arranging at least one soft magnetic element and/or at least one electrically conductive element at predetermined regions along the at least one main coil and/or the at least one perimeter coil.

According to yet another aspect of the invention, a method of producing a composite part is provided. The method comprises a step of providing a molding tool according to what has been described above. Further, the method comprises placing a fiber and plastic material on the contact surface of the mold, closing the mold and applying a consolidation pressure on the material to be processed. The method also comprises a step of inductively heating the mold containing the material according to a predetermined time-temperature profile to consolidate and/or cure the material to produce the composite part.

In an embodiment, before the step of applying a consolidation pressure on the material to be processed, the method may further comprise a step of applying vacuum pressure on the material.

In an embodiment, the method may further comprise a step of cooling at least a part of the molding tool and/or the produced part, and demolding the part from the molding tool.

According to a further aspect of the invention, a method of producing a composite part is provided. The method comprises a step of providing a molding tool according to what has been described above. Further, the method comprises placing a fiber material to be processed on the contact surface of the mold, closing the mold, applying a vacuum pressure and infusing the fiber material with a plastic material, the plastic material thereby forming part of the material to be processed. The method also comprises a step of inductively heating the mold containing the fiber and plastic material according to a predetermined time-temperature profile to produce the composite part.

In an embodiment, the steps of inductively heating and applying pressure or infusing the plastic material, or resin, on the mold occur simultaneously.

In yet an embodiment, the method may further comprise a step of cooling at least a part of the molding tool and/or the produced part, and demolding the part from the molding tool.

### BRIEF DESCRIPTION OF THE DRAWINGS

By way of example, embodiments of the present invention will now be described with reference to the accompanying drawings, in which:
Fig. 1a is a schematic block diagram of a molding tool in relation to a processing means according to an embodiment,
Fig. 1b is a schematic view of a molding tool and a material according to an embodiment,
Fig. 2 is a cross-section view of a coil assembly attached to a mold of a molding tool according to an embodiment,
Fig. 3 is a cross-section view of a coil assembly attached to a backing structure which in turn is attached to a mold of a molding tool according to an embodiment,
Fig. 4 is a schematic block diagram showing a method of manufacturing a molding tool according to an embodiment,
Fig. 5a is a schematic block diagram showing a method of producing a composite part according to an embodiment,
Fig. 5b is a schematic block diagram showing a method of producing a composite part according to another embodiment,
Fig. 5c is a schematic view of part of a method of producing a composite part in a molding tool according to an embodiment,
Fig. 6 is a perspective view of an outer surface of a molding tool having one main coil and one perimeter coil according to an embodiment,
Fig. 7 is a perspective view of an outer surface of a molding tool having one main coil and one perimeter coil according to another embodiment,
Fig. 8 is a perspective view of an outer surface of a molding tool having two main coils and one perimeter coil according to an embodiment,
Fig. 9 is a perspective view of an outer surface of a molding tool having two main coils and one perimeter coil according to another embodiment,
Fig. 10 is a perspective view of an outer surface of a molding tool having two main coils and two perimeter coils according to an embodiment, and
Fig. 11 is a perspective view of an outer surface of a molding tool having two main coils and two perimeter coils according to another embodiment.

### DETAILED DESCRIPTION OF EMBODIMENTS

Molding tools are often used to produce composite parts of different shapes. Typical parts to be produced are automotive vehicle parts, drones or aircraft parts as well as wind energy components, such as for instance body panels and structural components, e.g. car doors, aircraft and wind mill wings etc.. Tools applicable within the inventive concept disclosed herein are shell tools and solid tools, with single or multiple cavities. The inventive concept is directed mainly towards inductively heated tools for the manufacturing of composite articles.

Embodiments of the invention will now be described with reference to the accompanying drawings. The invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular embodiments illustrated in the accompanying drawings is not intended to be limiting of the invention. In the drawings, like numbers refer to like elements.

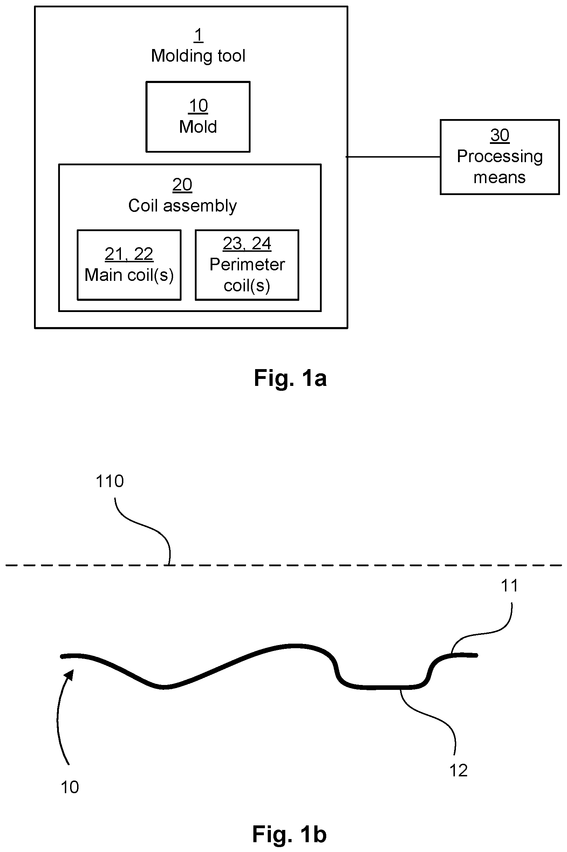

With reference to Fig. 1a-b, the molding tool 1 includes a mold 10 and a coil assembly 20. The molding tool 1 is in operative communication with at least one processing means 30 which controls and energizes the operation of the coil assembly 20 and thereby also the inductive heating process which heats the molding tool 1 and results in the production of a composite part A.

As illustrated in Fig. 1b, the mold 10, as seen from a cross section view, has a body having a contact surface 11 and an outer surface 12. The contact surface 11 is an inner region of the mold 10 configured to be facing a material 110 which is to be transformed into a composite part A during a molding process. The mold 10 may also be seen as a body having a cavity which is dimensioned and shaped into the desired shape of the part A to be produced. It is the contact surface 11 of the mold 10 which is configured to receive the material 110. For instance, a part A to be produced in the mold 10 of the molding tool 1 is a car door, or any other composite part. The mold 10 may contain more than one cavity and thereby it may produce several components in a single production cycle, still referred to as a material 110 being transformed into a composite part A.

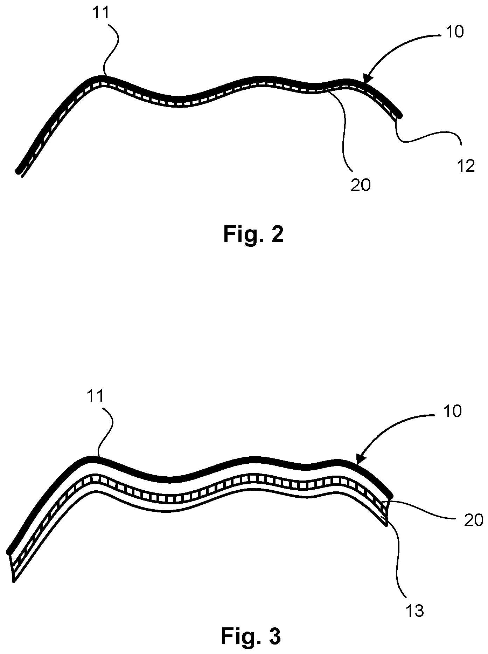

Hereafter, the contact surface 11 will be called the front side of the mold and the outer surface 12 will be called the back side of the mold 10. The back side 12 is the part of the mold to which the coil assembly 20 is to be attached. Hence, the heating of the molding tool 1 is induced by the coil assembly 20 arranged on the back side 12 of the mold 10. Optionally, the coil assembly 20 is attached to the back side via a backing structure 13 located in the vicinity of the back side 12. This will be elaborated further in relation to Fig. 3.

Typically, the mold 10, and thus also the molding tool 1, is made at least partially of a material chosen from a group consisting of carbon fiber composite materials or metals. The material is preferably a material with significant electrical conductivity to be able to be heated by induction, for example more than 1 Siemens/meter.

If the mold 10 is made of a carbon fiber composite material, the mold 10 may be a carbon fiber reinforced plastic (CFRP). The fiber reinforcement can also be a hybrid of carbon and another type of technical fiber such as glass fiber, basalt fiber etc.. The fibers can be continuous or chopped, unidirectional plies or multi-axial layups or randomly oriented fibers. In a preferred embodiment the fibers are woven. Different types of fibers and layups have their particular advantages, such as stiffness, coefficient of thermal expansion (CTE), electrical and thermal properties, and preferably a carbon fiber with high thermal conductivity such as pitch carbon fiber or high thermal conductivity polyacrylic nitrile carbon fibers is used to simplify uniform temperature generation. Similar choice applies to the matrix material, where easy and low temperature processing is advantageous, as well as high temperature resistance and high glass transition temperature. Also low CTE and long durability or service life are important properties. Examples of matrices can be epoxies, bismaleimides, polyimides, benzoxazines, phenolics and also silicones, and thermoplastics or semicrystallines such as polyetereterkotone (PEEK), polyphenylene-sulfide (PPS) etc..

If the mold 10 is made at least partially of metal, it may typically be in steel, aluminum, or an alloy such as invar. Also nickel or coated steel is common, but any metal works and might be beneficial depending on the particular application. The purpose of using a metal or a carbon fiber composite material is that the molding tool 1, and more importantly its mold 10, should be able to be heated inductively. Basically, the molding tool 1 is a susceptor, meaning that it has the ability to absorb electromagnetic energy and convert it to heat. In this case, the molding tool 1 is heated inductively via the coil assembly 20. During the molding process, the material 110 to be processed, which is typically a mix of a fiber and polymeric material, is configured to be heated by the inductively heated molding tool 1. The material 110 to be processed may also be a fiber material which is infused with a resin later on in the molding process. In total, the resin, or plastic material, to be infused during the molding process is regarded as being part of the material 110 to be processed.

In some cases, the mold 10 and the material 110 to be processed may be of similar material and might also absorb heat directly from the induction. The material 110 to be processed will be discussed in more detail below. The mold 10 can be single-sided to reduce costs when the requirements on one of the sides of the part is lower than the other and provide a more simple molding tool 1. It may alternatively be double-sided depending on the process and requirements, either as two independent molding tools 1, tool halves or as one molding tool 1 where at least one of the coils 21-24 is connected together, despite mechanically it might be two individual molds 10.

The material 110 to be processed in the mold 10, will be heated mainly due to its contact with the contact surface 11 but might also absorb a certain amount of energy directly from the induction heating if it contains carbon fiber. The material 110 is typically a composite material based on a mix of fiber material and polymeric material. As a non-limiting example, the material may contain multiple fiber layers, e.g. 10 layers of glass or carbon fibers embedded in a thermoset or thermoplastic matrix. The material can be made of a woven web of fibers, or for example chopped fibers, organized or randomly oriented. Optionally, the web is nonwoven. The matrix may be for example epoxy, polyester (PET), polypropylene (PP), polyamide (PA), polycarbonate (PC) or it can be a semicrystalline thermoplastic material such as polyphenylenesulfide (PPS) or polyetereterketone (PEEK) etc. The fibers can also be of any other technical textile, such as flax fibers, aramid, ultra-high molecular weight polyethylene, etc. As a non-limiting example, glass fibers may be used as a reinforcement in a polycarbonate based matrix. The composite materials can also be built by hybrid fiber reinforcement, for example glass fiber and carbon fiber.

The part A is produced in the molding tool 1 by heating the material 110 to be processed under pressure. Put differently, when the material 110 is heated by the inductively heated molding tool 1, the part A is being produced, either because there is a matrix material already there when the process starts, or because it is added during the process using an infusion process. Preferably, the material 110 is processed under vacuum pressure to reduce the risk of voids, pin holes or insufficient wet out.

As illustrated in Fig. 1a, the molding tool 1 comprises a coil assembly 20. The coil assembly 20 preferably comprises at least one main coil 21, 22 and at least one perimeter coil 23, 24. In the following, the main coils and the perimeter coils will be described separately.

In one embodiment, the molding tool 1 is arranged with one or more main coils 21, 22 arranged on the back side 12 of the mold 10. The main coils 21, 22 are electrically insulated from the mold 10 and are configured to inductively heat the mold 10 when a current is flowing through them. Preferably, the main coils are made of litz wires due to their flexibility and low losses at high frequencies. There can be one or several wires in parallel depending on the dimensions and application, to ensure a good efficiency of the system.

Moreover, the main coil(s) 21, 22 is further defined as the at least one coils heating the major area, at least 50%, of the desired heated region of the mold 10, i.e., the major area of where the material 110 is placed. It can also be described as the coil(s) covering the largest portion of the mold. Depending on the geometry of the mold 10, the distribution of the area covered by the main coil(s) 21, 22 and the perimeter coil(s) 23, 24 will change. Typically, the larger the mold, the larger the fractional area covered by the main coil(s).

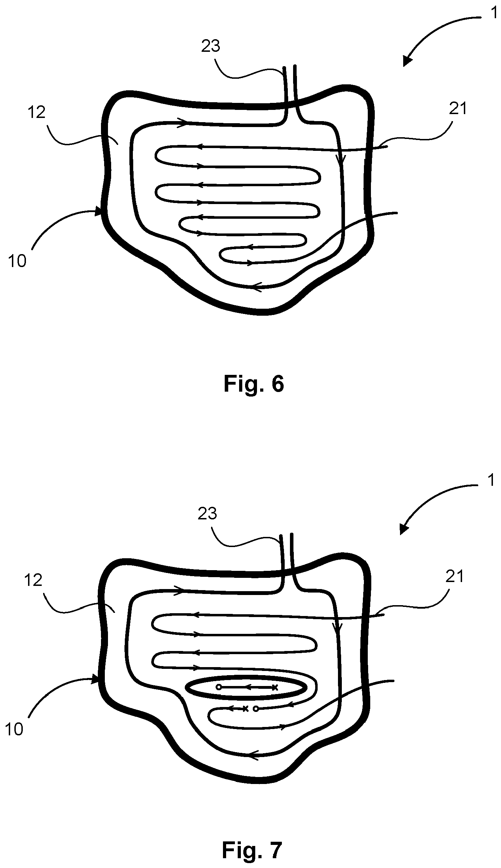

To achieve a uniform heat distribution during the molding process, the main coils 21, 22 are arranged to a major extent in a meander-like pattern on the back side 12 of the mold 10. The meander-like pattern may be seen as a cooking grid or grill pattern, a serpentine pattern or a sine wave pattern. Either way, the main goal of the meander-like pattern is that a current flowing through each main coil 21, 22 is directed, alternatingly, in opposite directions locally along its length and throughout the back side 12 of the mold 10. This is clear from the small arrows shown in Figs. 6-11. The purpose of the opposing directions of the current is to compensate for, or spread out, the local magnetic fields generated around the coil to achieve a uniform heating of the mold 10.

Another way of describing the meander-like pattern is through the fact that the mold 10 is configured to be inductively heated by the at least one main coil. Each main coil 21, 22 is arranged in a meander-like pattern on the back side 12 of the mold 10, such that an alternating electric current flowing through each main coil 21, 22 is directed in, alternatingly, opposite directions over the back side 12 of the mold 10, following the meander-like pattern. The magnetic field generated by the current is then configured to induce currents in at least parts of the mold 10 to be heated.

Put differently, each main coil 21, 22 arranged on the back side 12 of the mold is folded, or bent, at least once along its length. Each main coil 21, 22 may be bent several times along its length. Further on, each coil may be straight, curved or shaped in between the bends. Downstream of each bend, the current changes direction with respect to the direction it had upstream of the same bend.

Another way of describing the meander-like pattern may be through parallel lines where each line is joined together with an adjacent line at an end thereof. This way, a current flowing in one direction along a line of a main coil 21, 22 is directed in an opposite direction with respect to the same current flowing in an adjacent line of the same main coil 21, 22.

Regardless of how the meander-like pattern of the main coils 21, 22 is described, its purpose is still to ensure that the magnetic field generated along a certain portion of each main coil 21, 22 during use, is counteracted by the magnetic field generated along a parallel portion of the same main coil 21, 22 to provide a uniform heating throughout the mold 10.

The shape of the mold 10, represents the geometry of the part A to be produced, which can vary a lot and have complex shapes. As the shape of the mold 10 may be dependent on the geometry of the part being molded, there may be some difficulties in shaping the main coils 21, 22, to achieve a uniform heating. However, it is beneficial if the back side 12 of the mold 10 is covered by main coil(s) arranged, to a major extent, in a meander-like pattern. The word 'covered' is not to be interpreted in a way that the main coil(s) explicitly cover the entire back side 12 of the mold 10. In fact, in most cases, a major part of the back side 12 of the mold 10 is not explicitly covered by coils. Instead, there is space between the adjacent turns or wires. This concept can also be understood from Figs. 6-11 where there is space between the turns or wires of the coil(s). Thus, by 'covered', it is meant that the back side 12 of the mold 10 has an area being substantially inductively heated by the coil(s). Furthermore, a major extent may be seen as at least 85%. For practical reasons or due to local thickness variations of the mold 10, it might be beneficial, to locally, on a small portion or part of the mold (<15%), shape the main coils in a way where the magnetic fields from two adjacent turns collaborate and amplify the heat generation. This concept is exemplified and described in relation to Fig. 7 below.

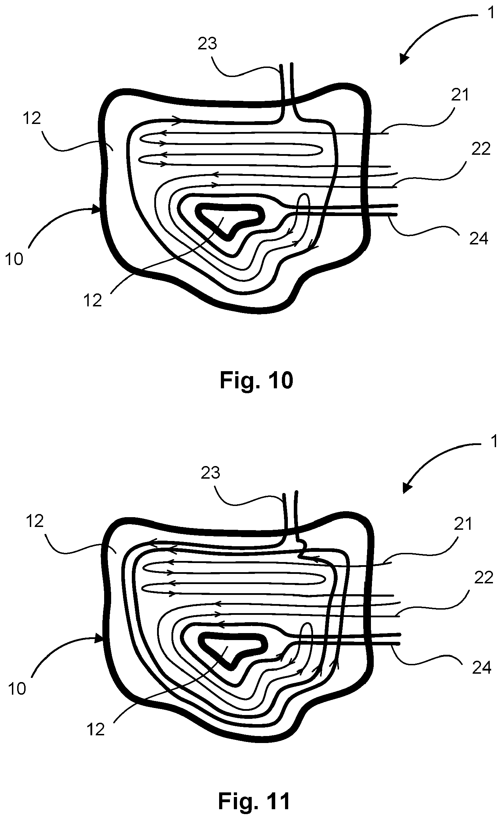

Other than main coils 21, 22, the coil assembly 20 may have one or more perimeter coils 23, 24. The at least one perimeter coil 23, 24 is also electrically insulated from the mold 10. Just like the main coils 21, 22, each perimeter coil 23, 24 is arranged on the back side 12 of the mold 10. A purpose of each perimeter coil 23, 24 is to delimit at least one area of the mold 10 to be inductively heated. Put differently, the perimeter coil 23, 24 can be arranged so that it marks a perimeter, or an outline of the mold 10 to be heated. Each perimeter coil 23, 24 may also outline an area, such as an island, on the mold 10 which is not subjected to inductive heating. For instance, some molding tools 1 may have areas which are not to be heated. In the case of molding material into a car door, a part corresponding to that of a window may not want to be heated by the mold 10. The same might apply for example on multi-cavity molds. In that particular case, a first perimeter coil 23 may be arranged to surround the main coils 21, 22 at the back side 12 of the mold 10 and a second perimeter coil 24 may be arranged at another location on the back side 12 of the mold 10 which corresponds to the window of the car door. This is exemplified in the embodiment shown in Figs. 10-11 which will be discussed more below.

Another purpose of each perimeter coil 23, 24 is to control temperature gradients caused by time or temperature dependent properties in the mold, such as thermal losses, thermal conduction, convection or radiation, or variation in thickness of the mold or the material to be processed. These gradients may appear at the edge portions where the main coils 21, 22 end on the back side 12 of the mold 10.

As will be described in more detail later on, two or more perimeter coils may be arranged adjacent to each other. This is beneficial as it provides a way to control the temperature gradients and/or to allow sufficient power to be applied on the perimeter area. Two or more main coils may also be arranged adjacent to each other.

As mentioned, the coil assembly 20 is attached to the back side 12 of the mold 10 (shown in Fig. 2). For this, fastening means (not shown) may be needed. The fastening means may for instance be in the form of bolts, hooks or staples. The coil assembly 20 may also be attached to the back side 12 of the mold 10 by an adhesive. In an embodiment, the coil assembly 20, for instance consisting mainly of litz wires, may be glued directly onto the back side 12 of the mold 10. In another embodiment, the coil assembly 20 may first be glued or mechanically fitted to a backing structure 13 (shown in Fig. 3) which is in turn attached to the mold 10 in any of the ways just described or by a mechanical clamping, including a press, vacuum, etc. The backing structure 13 may be offset from the mold 10. Furthermore, the backing structure 13 may be an external structure which is electrically insulated from the mold 10. The assembly of the backing structure is dependent on the application.

In order to further improve the inductive heating of the molding tool 1, soft magnetic elements and electrically conductive elements (not shown) may be placed at predetermined areas along the coil assembly 20. The soft magnetic elements are typically made of a magnetic material with small hysteresis losses. The soft magnetic elements are produced in a way to avoid induced currents in the material. Typical examples of soft magnetic materials are soft magnetic composites, sometimes referred to as powder cores, or soft ferrites. The electrically conductive elements are typically made of highly electrically conductive material such as copper or aluminum. The soft magnetic and electrically conductive elements are used to achieve the desired heating pattern, to concentrate the magnetic flux density, to improve the efficiency of the induction heating system, to reduce stray magnetic fields and to shield the high frequency electromagnetic field to prevent undesired areas or materials to be heated up by induction.

At least one processing means 30 is provided which is in operative communication with the at least one main coil 21, 22 and the at least one perimeter coil 23, 24. The coils 21, 22, 23, 24 of the coil assembly 20 may be coupled to one and the same processing means or to different processing means. The processing means 30 is configured to generate a high frequency current in the coil assembly 20. Preferably, the processing means 30 is or comprises a frequency converter. The at least one processing means 30 is configured to generate an alternating voltage and current to the coils 21, 22, 23, 24 so as to inductively heat the mold 10 of the molding tool 1 so that a part A can be produced. In some embodiments, one processing means 30 alone can control multiple coils. In other embodiments, several processing means 30 may be used to control the heating of the molding tool 1.

Preferably, the processing means 30 comprises a certain intelligence in terms of some type of microcontroller or central processing unit, memory etc. and at least one type of interface (not shown) for operating the system, either as a human machine interface in terms of a graphical display, buttons, knobs or similar, or as a communication interface to be controlled from a surveillance system such as a PC or PLC.

Fig. 2 shows an embodiment where a coil assembly 20 is attached to a mold 10 of the molding tool 1. The attachment of the coil assembly 20 including the at least one main coil 21, 22 and the at least one perimeter coil 23, 24 is illustrated by the dashed lines in Fig. 2. The coils 21, 22, 23, 24 may be attached via fastening means or via an adhesive, as mentioned previously. The fastening means may for instance be in the form of bolts, hooks, staples or mechanical locking such as press fit. The coil assembly 20, for instance consisting mainly of litz wires, may be glued directly onto the back side 12 of the mold 10.

Fig. 3 shows another embodiment where the coils 21, 22, 23, 24 of the coil assembly 20 are first attached to a backing structure 13 which is in turn attached to the back side 12 of the mold 10. As mentioned previously, the backing structure 13 may be offset from the mold 10. Furthermore, the backing structure 13 may be an external structure which is electrically insulated from the mold 10. In Fig. 3, the backing structure 13 is attached to the mold 10 at its end portions.

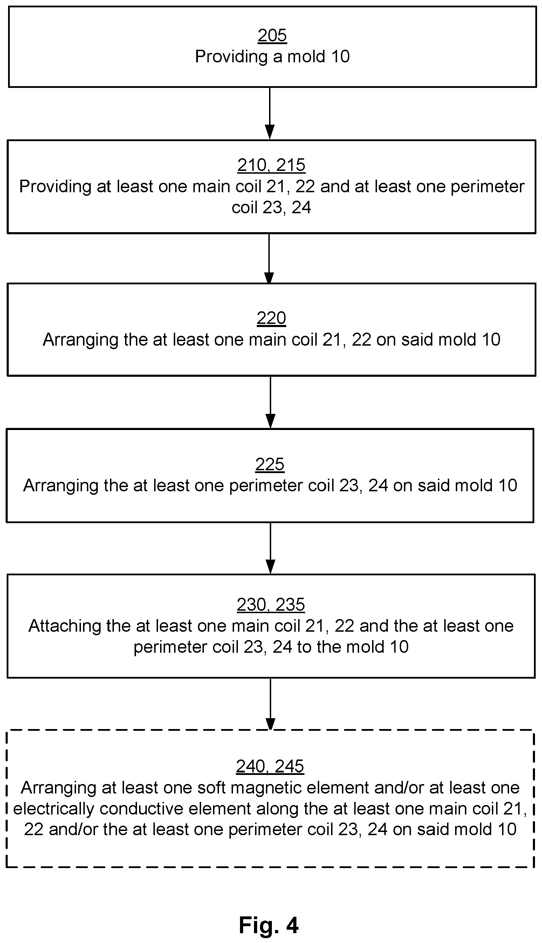

A method of manufacturing a molding tool 1 will now be described with reference to Fig. 4.

In a first step, a mold 10 which is configured to be inductively heated is provided 205 having a contact surface 11 and an outer surface, or back side, 12. In a next step, at least one main coil 21, 22 and at least one perimeter coil 23, 24 are provided 210, 215 on the mold 10. The at least one main coil 21, 22 is arranged 220 in a meander-like pattern on the outer surface 12 of the mold 10 according to any of the embodiments shown in Figs. 6-11, such that an alternating electric current flowing through each of the at least one main coil 21, 22 is directed in, alternatingly, opposite directions over the outer surface 12 of the mold 10 following the meander-like pattern. A magnetic field generated by this current is configured to induce currents in at least a portion of, or parts of, the mold 10 to be heated up. Optionally, several main coils are arranged, adjacent to each other and substantially in parallel, following the same meander-like pattern over the outer surface of the mold.

The method further comprises arranging 225 the at least one perimeter coil 23, 24 on the outer surface 12 of the mold 10, such that is delimits at least one area of the mold 10 to be inductively heated. Optionally, several perimeter coils are arranged adjacent to each other and substantially in parallel, following the same pattern over the outer surface of the mold. By `at least one area' of the mold is meant at least a portion of the mold. This may also be formulated as `at least parts of the mold' to be heated. In some cases, it is desirable to not heat the entire mold. Then, some areas/portions/parts of the mold are delimited by a perimeter coil. The same concept applies in areas/portions/parts of the mold which are to be heated. The arrangement of the at least one perimeter coil 23, 24 may define these areas. When the mold is being heated, the edge of the mold or the heated areas are typically being affected differently by convective, conductive, and radiative cooling than the rest of the mold, thus it is beneficial to be able to compensate this by controlling the temperature independently in this area.

Notably, the at least one main coil 21, 22 and the at least one perimeter coil 21, 22 comprise litz wires. Furthermore, the at least one main coil 21, 22 and the at least one perimeter coil 21, 22 are electrically insulated from the mold 10, and are in operative communication with at least one processing means 30. The at least one main coil 21, 22 and the at least one perimeter coil 23, 24 are attached 230, 235 to the outer surface, or back side, 12 of the mold 10 via an adhesive element or via a backing structure 13.

The method may further comprise the step of arranging 240 at least one soft magnetic element at predetermined regions along the at least one main coil 21, 22 and/or the at least one perimeter coil 23, 24.

The method may further comprise the step of arranging 245 at least one electrically conductive element at predetermined regions along the at least one main coil 21, 22 and/or the at least one perimeter coil 23, 24.

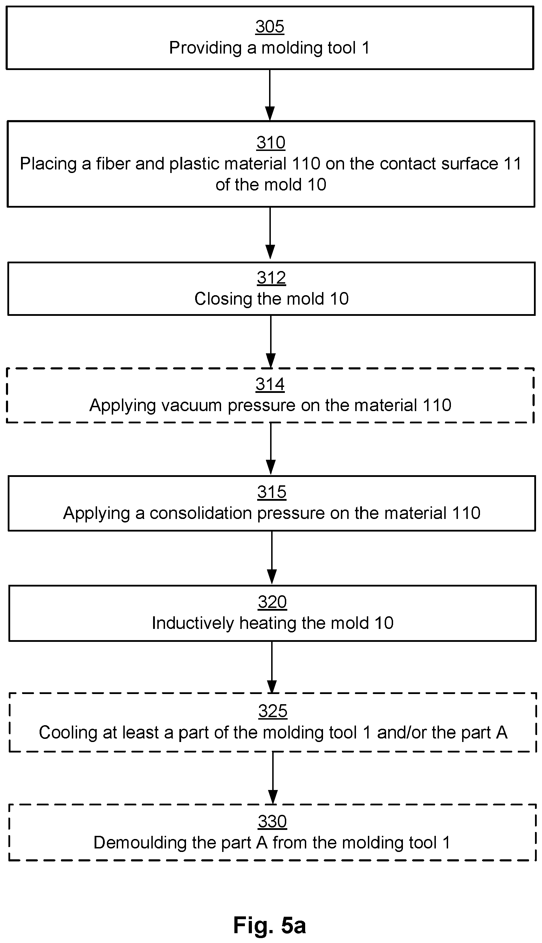

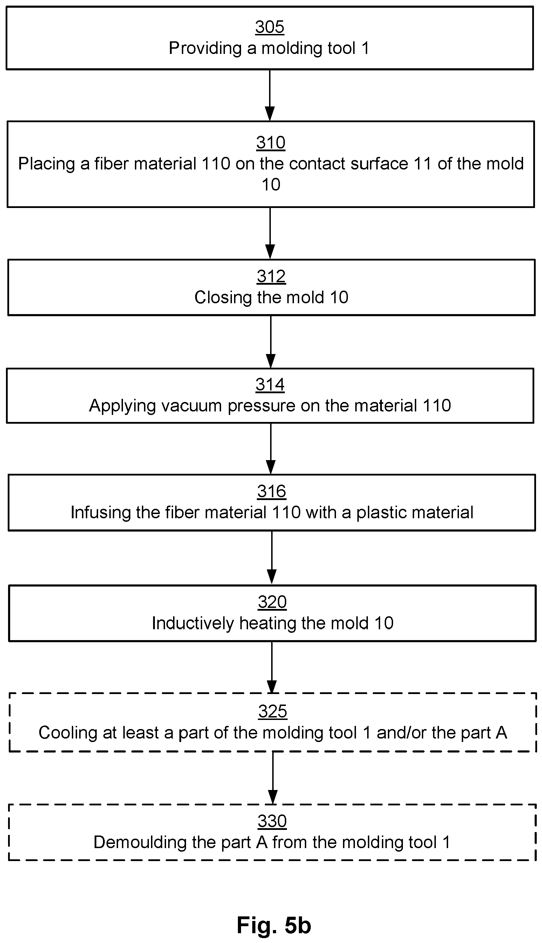

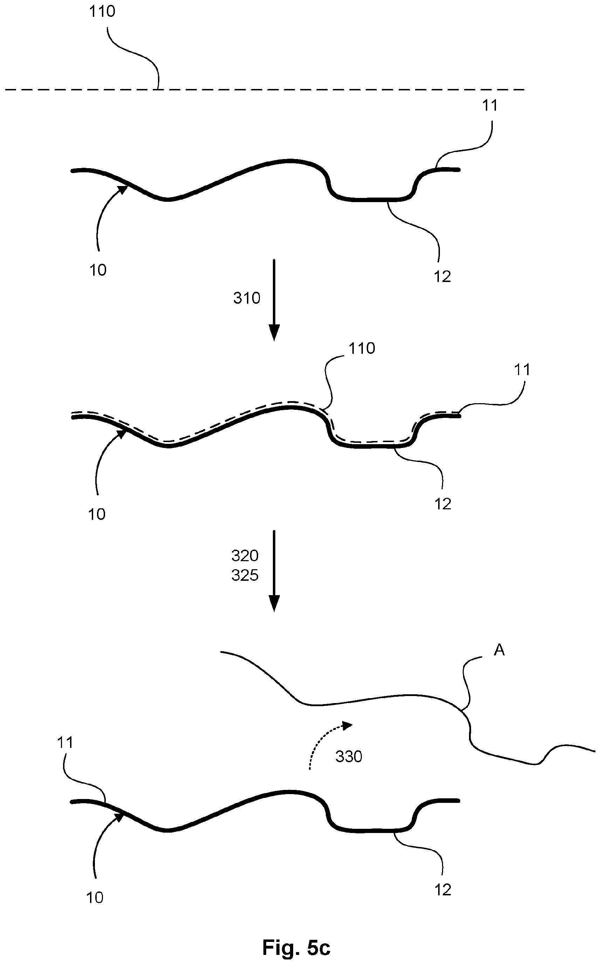

A method of producing a composite article, or part A, using the molding tool 1 is shown in Fig. 5a. In the method described in relation to Fig. 5a, the material to be processed, which is placed in the mold, is a mix of a fiber and plastic material. Another method is shown in Fig. 5b, where the material placed in the mold is a fiber material which, during the molding process, is infused with a plastic material, so that the plastic material then forms part of the material 110 to be processed. Fig. 5c offers a schematic view of parts of these methods.

In the methods illustrated in Figs. 5a-c, the material 110 to be processed may consist of technical fibers such as carbon, glass, aramid, ultra-high molecular weight polyethylene, flax or basalt fibers, or be a mix of fiber and plastic material. The material 110 may be a prepreg, sheet/bulk molding compound (SMC/BMC), comingled yarns, intermediate material or a separate fiber and plastic, where the plastic may for example be in the form of sheets or powder. The plastic component may be a thermoplastic or a thermoset and the fiber component may be fiber tows, multiaxial material, weave or random oriented fibers. The layup, number of layers, directions, size, and shape of the material 110 can vary a lot depending on the process and application, well known in the field. The material 110 can be put into the mold in a sequence, for example layer by layer or may be pre-formed before being put into the mold. The material 110 may, in addition to the fibers, also contain core/distance/sandwich material such as foam cores, honeycomb structures etc., common in many composite components, or metal inserts, typical for assembly purposes in the final application of the part A. The material 110 may even be transformed into a multi-material part A, containing both fiber composites and metal.

The method shown in Fig. 5a comprises the step of providing 305 a molding tool 1 having a mold 10 configured to be inductively heated by a coil assembly 20 according to the teachings herein. Optionally, a release agent is added to the molding tool 1 at this stage to facilitate separation of the produced part A from the mold 10. The method further comprises placing 310 a material 110 to be processed on the contact surface 11 of the mold 10. Preferably, the material 110 is a fiber and plastic material in the form of a pre-form with the similar shape as the contact surface 11, easy to put into the mold.

In this case, where the plastic is already in the mold, i.e. as a matrix material incorporated in the fiber material placed in the mold, the method further comprises closing 312 the mold 10 and applying 315 consolidation pressure on the material 110 to be processed. The mold 10 may for instance be closed by another molding tool 1 halve or by a flexible membrane or bag.

Before applying 315 consolidation pressure on the material 110 to be processed, the method may further comprise a step of applying 314 a vacuum, or near vacuum pressure on the material 110. Certain processes benefit from the reduced pressure, i.e. the vacuum pressure, on the material to remove entrapped air and thereby enhance wet out of the matrix on the fibers during the manufacturing process and thereby reduce the risk of dry-spots or voids in the produced part A.

The consolidation pressure may for example be applied by arranging a vacuum bagging unit on top of the material 110 and performing vacuum bagging. The consolidation pressure may also be applied by a press, an autoclave or just via atmospheric pressure if there is near vacuum pressure inside of the mold. In the latter case, the step of applying 315 consolidation pressure on the material 110 often means drawing vacuum in the molding tool 1. In some cases, vacuum pressure is the same as consolidation pressure.

The method which is described in relation to Fig. 5a further comprises inductively heating 320 the mold 10 containing the material 110. The heating may be done according to a predetermined time-temperature profile to consolidate and/or cure the material 110 to produce the composite part A. The mold 10 is heated by the coil assembly 20 which is in operative communication with the processing means 30 as discussed previously. The molding tool 1, or its mold 10, may be heated prior to, during and/or after the step 315 of applying pressure.

The mold 10 and the material 110 to be processed are held in this position in the molding tool 1 during a predetermined time period, typically to ensure sufficient temperature throughout the material and a proper consolidation/wet out of the fiber composite material. In the case of a thermoset, the resin, or plastic material, must be sufficiently cured before demolding, while in the case of a thermoplastic, the part becomes solid after being cooled down. Thus, eventually, a cured or consolidated material 110 is provided and forms the composite part A. This is shown schematically in Fig. 5c. There are a few applicable processes for the method, for example often referred to as compression molding, stamp forming, autoclave processing, out of autoclave processing, vacuum bagging, etc.

Now turning to Fig. 5b, a case where no matrix material is placed in the mold, i.e. in the case where the material 110 initially consists of fibers only, possibly in combination with core/distance/sandwich material or metal inserts etc. as described above is described. The method, after providing 305 a molding tool 1, includes a step of placing the fiber material 110 in the mold. Afterwards, the mold is closed 312, typically with another mold half, a flexible membrane or a bag. The closed mold may, as in the case described above, consist of a plurality of mold halves, bags or membranes, or a combination, together providing a sealed or semi-sealed mold assembly. In this case the material 110 placed on the contact surface 11 of the mold 10 may also be called a layup or pre-form of fiber material.

The method related to Fig. 5b further comprises the step of applying 314 a reduced pressure on the material 110, preferably vacuum or near vacuum pressure. The evacuation of gas may be applied in single or a plurality of openings and may be performed only at this step or during the entire production process.

The method further comprises the step of infusing 316 the material 110 in the mold 10 with a matrix material, preferably a low viscosity resin of any type. The resin in this case may also be called a plastic material. This can be done using so called vacuum infusion, where the driving force is the pressure difference between the vacuum pressure in the mold and the surrounding pressure. The infusion can also be done using a higher pressure, up to several hundred bars, often referred to as resin transfer molding RTM, high pressure resin transfer molding HPRTM, vacuum assisted resin transfer molding VARTM etc. Similar to what was discussed in relation to Fig. 5a above, the method further comprises inductively heating 320 the mold 10 containing the material 110.

In both of the methods described for producing a composite part A above, the step of heating 320 and applying pressure or infusing resin, i.e. the plastic material in the material 110 in the mold 10, may occur simultaneously. The heating may be done according to a predetermined time-temperature profile to produce the composite part A. The mold 10 is heated by the coil assembly 20 which is in operative communication with the processing means 30 as discussed previously. The molding tool 1, or its mold 10, may be heated prior to, during and/or after the step of infusing the matrix material in the case of the method described in relation to Fig. 5b.

A warm tool is typically beneficial to reduce the viscosity of the resin, but typically also starts a chemical reaction to cure the resin, so different aspects apply depending on the application and choice of material. In a preferred case, a proper wet-out of the fibers by the resin is obtained, without dry-spots or voids. In this method, the typical matrix is a thermoset resin and requires the matrix to be cured. Novel plastics are continuously being developed and the method may also be used with hybrid thermoset/thermoplastic matrixes and also low viscosity thermoplastics.

Both methods described in relation to Figs. 5a and 5b, as well as 5c above may further comprise active or passive cooling 325 of at least a part of the molding tool 1 and/or the produced part A formed therein. Finally, the methods described further comprise demolding 330 the part A from the molding tool 1. In certain applications, the part A can be demolded at the processing temperature, which is beneficial from a cycle time perspective. Contrarily, a reduced demolding temperature is often beneficial from a part quality perspective.

Part of the methods described above in relation to Figs. 5a and 5b is illustrated in Fig. 5c. The material 110 to be processed, i.e. a mix of a fiber material and a polymeric material, or a fiber material which is to be infused with a resin, or a plastic material, during the molding process as described above, is arranged 310 in the molding tool 1. The fiber material may for instance be a carbon fiber or a flax fiber material. Preferably, the mix is in the shape of a pre-form, or a piece of a web. Alternatively, the molding tool 1 is arranged in a stream-lined system where webs of material are fed into the molding tool 1 in steps. Before heating, the material 110 is shown in dashed lines. The material might extend beyond the perimeter coil of the molding tool 1, stop just at the at least one perimeter coil or only be located inside of the heated zone depending on the application. When the molding tool 1 is inductively heated 320 by the coil assembly driven by the processing means, the mix of fiber and polymeric material, i.e. the material 110 to be processed, is consolidated, or cured, to form a part A having a shape corresponding to that of the molding tool 1. After being cured or consolidated, the material to be processed is shown as a solid line. Once the process temperature profile has been completed, the molding tool is cooled down 325 and the part A is removed, or demolded, 330 from the molding tool. The shape of the part A corresponds to the contact surface of the mold.

A couple of exemplifying embodiments will be described in relation to Figs. 6-11. In these drawings, the at least one main coil 21, 22 and the at least one perimeter coil 23, 24 are arranged in different ways across the back side 12 of the mold 10. The at least one main coil 21, 22 is folded in a way that resembles a serpentine road which curves back and forth on itself.

In Fig. 6, a back side 12 of the mold 10 of the molding tool 1 is shown. A perimeter coil 23 is attached to the back side 12 and surrounds one main coil 21 which is arranged in a meander-pattern within the meaning as described through different perspectives above. The arrows distributed along the coils 21, 23 indicate the direction of the current when the molding tool 1 is subject to inductive heating. The coils 21, 23 are typically litz wires.

An alternative embodiment is shown in Fig. 7. Here, similarly to what is shown in Fig. 6 a back side 12 of the mold 10 of the molding tool 1 is shown. A perimeter coil 23 is attached to the back side 12 and surrounds one main coil 21 which is arranged in a meander-pattern. In a center part of Fig. 7, an area of the mold 10 is shown, which corresponds for instance to a local depression, groove or ridge in the mold to be heated. As can be seen, the main coil 21 is discontinuous around this area of the drawing. This is illustrated by a broken line between an 'x' and an 'o' along the main coil 21. The 'x' indicates a direction of current flow into the drawing and the 'o' indicates a direction of current flow out from the drawing. Hence, in Fig. 7, the main coil 21 'jumps in and out' of the drawing twice.

In the area of the mold 10 corresponding to a local depression in Fig. 7, the main coil 21 is continuous up to a first 'o' at which the main coil 21 is projected outwards from the back side 12 of the mold 10. Then, the main coil 21 is arranged back onto the back side 12 of the mold 10 in the local depression at a first 'x'. The main coil 21 is attached to the back side 12 of the depression at the first 'x', and extends along the depression, groove or ridge to a second 'o', indicating that the main coil 21 once again projects outwards from the back side 12 of the mold 10. A second 'x' located on the side of the mold 10 outside of the local depression indicates that the main coil 21 is brought back onto the back side 12 of the mold 10.

In one embodiment, the current in the main coil flows in the same direction as a neighboring, or adjacent turn of the coil. This is indicated in Fig. 7 by the arrows, around the local depression, at which the current flows, locally, in the same direction despite the meander-like arrangement of the coil, due to the discontinuity in the arrangement of the main coil 21. When the current flows in the same direction as a neighboring, or adjacent turn of the coil, the electric current and electromagnetic fields are amplified.

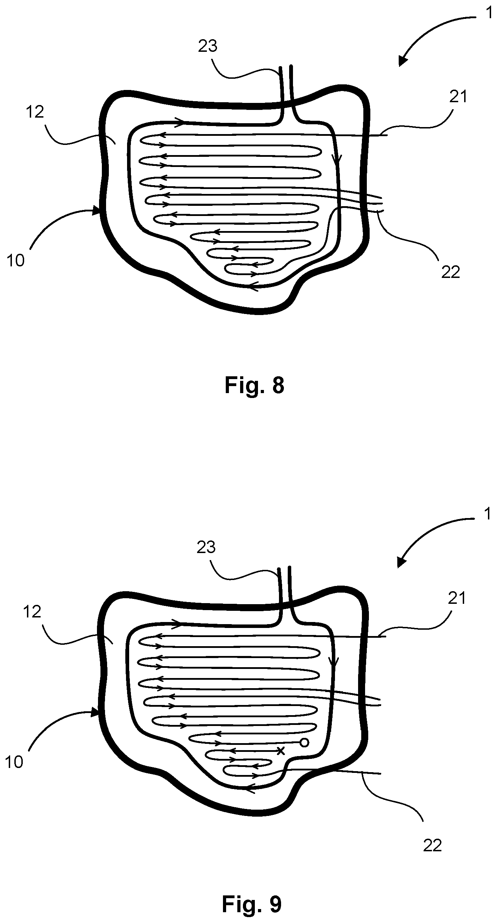

With reference to Fig. 8, a back side 12 of the mold 10 of the molding tool 1 is shown. A perimeter coil 23 is attached to the back side 12 and surrounds two main coils 21, 22 which are arranged in a meander-pattern within the meaning as described through different perspectives above. The arrows distributed along the different coils 21, 22, 23 indicate the direction of the current when the molding tool 1 is subject to inductive heating. The coils 21, 22, 23 are typically litz wires.

Fig. 9 illustrates another embodiment. In this example, the same features are present as in the embodiment of Fig. 8, except for that the second main coil 22 is discontinuous in the lower part of the drawing. This is illustrated by a broken line between an 'x' and an 'o', which in Fig. 8 is continuous in the same passage. The 'x' indicates a direction of current flow into the drawing and the 'o' indicates a direction of current flow out from the drawing. Hence, in Fig. 9, the second main coil 22 `jumps out' of the drawing at one point. This may be advantageous in cases where the shape of the mold restricts the possibility of using a predetermined distance between the turns in the coil while covering the surface.

Fig. 10 illustrates an embodiment of a mold 10 similar to that of Fig. 8, but having an additional second perimeter coil 24 and a centrally located part of the molding tool 1 which is not to be inductively heated. The centrally located part may also be called an island.

Yet another embodiment is shown in Fig. 11, which displays the same features as in Fig. 10, with the exception that the first perimeter coil 23 is wound twice around the main coils 21, 22. Optionally, instead of the first perimeter coil 23 being wound twice around the main coils, there may be two independent perimeter coils wound around the main coils (not shown), independently from and substantially in parallel with each other, following the same path of the perimeter coil 23 along the back side 12 of the mold 10. There may also be more than one additional perimeter coil wound around the main coils, arranged in parallel with a neighboring perimeter coil. Put differently, the second perimeter coil 24 shown in Fig. 11 may also be wound more than once around the so called island in the centrally located part of the drawing, either as one perimeter coil wound several times along its length, or as two or more perimeter coils arranged in parallel with a neighboring perimeter coil.

Hence, each perimeter coil delimiting a part of the mold to be heated may be wound more than two times around the area to be heated or isolated, or more than one perimeter coil may be arranged in parallel with a neighboring coil. Notably, an area to be isolated can be seen as an area which is configured to not be subjected to inductive heating.

Optionally, for all of the embodiments disclosed herein, one or more additional main coil and/or perimeter coil (not shown) may be wound, substantially in parallel with an adjacent coil of the same kind, respectively, along its path. Sometimes one or more coil adjacent to and substantially in parallel with its neighboring coil is beneficial to control the temperature gradients and/or to allow sufficient power to be applied on the relevant area of the mold to be heated or not be heated. The principle of having two or more coils arranged in parallel with each other along their path may be substituted by having one coil wound several times along its path or length. This is exemplified in Fig. 11 with perimeter coil 23 wound twice along its path surrounding the main coils.

## Claims

1. A molding tool for producing a composite part using induction heating, comprising:
a mold (10), having a contact surface (11) adapted to be in contact with a material (110) to be transformed into a composite part (A), and an outer surface (12);
at least one main coil (21, 22) arranged in a meander-like pattern on the outer surface (12) of the mold (10), such that an alternating electric current flowing through the at least one main coil (21, 22) is to its major extent directed in, alternatingly, opposite directions over the outer surface (12) of the mold (10), following the meander-like pattern, wherein the magnetic field generated by said current is configured to induce currents in at least parts of the mold (10) to be heated; and
at least one perimeter coil (23, 24) arranged on the outer surface (12) of the mold (10) and configured to delimit at least one area of the mold to be inductively heated;
wherein the mold (10) is configured to be inductively heated by the at least one main coil (21, 22) and the at least one perimeter coil (23, 24); and
wherein the at least one main coil (21, 22) and the at least one perimeter coil (23, 24) comprise wires which are electrically insulated from the mold (10) and in operative communication with at least one processing means (30),
**characterised in that** the wires are litz wires.

2. The molding tool according to claim 1, wherein the at least one main coil (21, 22) and the at least one perimeter coil (23, 24) are attached to the outer surface (12) of the mold via an adhesive element.

3. The molding tool according to claim 1, wherein the at least one main coil (21, 22) and the at least one perimeter coil (23, 24) are attached to the outer surface (12) of the mold (10) via a backing structure (13).

4. The molding tool according to claim 3, wherein the backing structure (13) is offset from the mold.

5. The molding tool according to any of the preceding claims, wherein the molding tool (1) is a shell tool or a solid tool.

6. The molding tool according to any of the preceding claims, wherein the mold (10) is at least partially made of a material chosen from a group consisting of: carbon fiber composite materials or metals.

7. The molding tool according to any of the preceding claims, further comprising at least a soft magnetic element and/or at least an electrically conductive element arranged at predetermined regions along the at least one main coil (21, 22) and/or the at least one perimeter coil (23, 24).

8. A method of manufacturing a molding tool according to any of claims 1-7, comprising:
providing (205) a mold (10) configured to be inductively heated, having a contact surface (11) and an outer surface (12);
providing (210, 215) at least one main coil (21, 22) and at least one perimeter coil (23, 24);
arranging (220) the at least one main coil (21, 22) in a meander-like pattern on the outer surface (12) of the mold (10), such that an alternating electric current flowing through the at least one main coil (21, 22) is to its major extent directed in, alternatingly, opposite directions over the outer surface (12) of the mold (10), following the meander-like pattern, wherein the magnetic field generated by said current is configured to induce currents in at least parts of the mold (10) to be heated;
arranging (225) the at least one perimeter coil (23, 24) on the outer surface (12) of the mold (10), such that it delimits at least one area of the mold (10) to be inductively heated;
wherein the at least one main coil (21, 22) and the at least one perimeter coil (21, 22) comprise litz wires which are electrically insulated from the mold (10), and in operative communication with at least one processing means (30).

9. The method according to claim 8, further comprising:
attaching (230, 235) the at least one main coil (21, 22) and the at least one perimeter coil (23, 24) to the outer surface (12) of the mold (10) via an adhesive element or via a backing structure (13).

10. The method according to claim 8 or 9, further comprising:
arranging (240, 245) at least one soft magnetic element and/or at least one electrically conductive element at predetermined regions along the at least one main coil (21, 22) and/or the at least one perimeter coil (23, 24).

11. A method of producing a composite part, comprising:
providing (305) a molding tool (1) according to any of claims 1-7;
placing (310) a fiber and plastic material (110) on the contact surface (11) of the mold (10);
closing (312) the mold (10);
applying (315) a consolidation pressure on the material (110) to be processed; and
inductively heating (320) the mold (10) containing the material (110) according to a predetermined time-temperature profile to consolidate and/or cure the material (110) to produce the composite part (A).

12. The method according to claim 11, wherein, before applying (315) a consolidation pressure on the material (110) to be processed, the method further comprises a step of applying (314) vacuum pressure on the material (110).

13. The method according to claims 11 or 12, wherein the method further comprises:
cooling (325) at least a part of the molding tool (1) and/or the produced part (A); and
demolding (330) the part (A) from the molding tool (1).

14. A method of producing a composite part, comprising:
providing (305) a molding tool (1) according to any of claims 1-7;
placing (310) a fiber material (110) to be processed on the contact surface (11) of the mold (10);
closing (312) the mold (10);
applying (314) vacuum pressure and infusing (316) the fiber material with a plastic material, the plastic material thereby forming part of the material (110) to be processed;
inductively heating (320) the mold (10) containing the fiber and plastic material (110) according to a predetermined time-temperature profile to produce a composite part (A).

15. The method according to claim 14, wherein the method further comprises:
cooling (325) at least a part of the molding tool (1) and/or the produced part (A); and
demolding (330) the part (A) from the molding tool (1).

## Patentansprüche

1. Formwerkzeug zum Herstellen eines Verbundbauteils mittels Induktionserwärmung, aufweisend:
eine Form (10), die eine Kontaktoberfläche (11), die dazu ausgebildet ist, mit einem in ein Verbundbauteil (A) umzuwandelnden Material (110) in Kontakt zu sein, und eine äußere Oberfläche (12) aufweist;
zumindest eine Hauptspule (21, 22), die in einem mäanderartigen Muster auf der äußeren Oberfläche (12) der Form (10) angeordnet ist, so dass ein durch die zumindest eine Hauptspule (21, 22) fließender elektrischer Wechselstrom größtenteils in alternierend entgegengesetzte Richtungen über die äußere Oberfläche (12) der Form (10) geleitet wird und dabei dem mäanderartigen Muster folgt, wobei das durch den Strom erzeugte Magnetfeld dazu eingerichtet ist, Ströme in zumindest Teilen der zu erwärmenden Form (10) zu induzieren; und
zumindest eine Umfangsspule (23, 24), die auf der äußeren Oberfläche (12) der Form (10) angeordnet und dazu ausgebildet ist, zumindest einen induktiv zu erwärmenden Bereich der Form abzugrenzen;
wobei die Form (10) dazu ausgebildet ist, durch die zumindest eine Hauptspule (21, 22) und die zumindest eine Umfangsspule (23, 24) induktiv erwärmt zu werden; und
wobei die zumindest eine Hauptspule (21, 22) und die zumindest eine Umfangsspule (23, 24) Drähte aufweisen, die von der Form (10) elektrisch isoliert sind und in betriebsmäßiger Verbindung mit zumindest einem Verarbeitungsmittel (30) stehen,
**dadurch gekennzeichnet, dass** die Drähte Litzendrähte sind.

2. Formwerkzeug nach Anspruch 1, wobei die zumindest eine Hauptspule (21, 22) und die zumindest eine Umfangsspule (23, 24) über ein Haftelement an der äußeren Oberfläche (12) der Form angebracht sind.

3. Formwerkzeug nach Anspruch 1, wobei die zumindest eine Hauptspule (21, 22) und die zumindest eine Umfangsspule (23, 24) über eine Stützstruktur (13) an der äußeren Oberfläche (12) der Form (10) angebracht sind.

4. Formwerkzeug nach Anspruch 3, wobei die Stützstruktur (13) von der Form versetzt ist.

5. Formwerkzeug nach einem der vorhergehenden Ansprüche, wobei das Formwerkzeug (1) ein Schalenwerkzeug oder ein Vollwerkzeug ist.

6. Formwerkzeug nach einem der vorhergehenden Ansprüche, wobei die Form (10) zumindest teilweise aus einem Material hergestellt ist, das aus einer Gruppe bestehend aus Kohlefaser-Verbundwerkstoffen oder Metallen ausgewählt ist.

7. Formwerkzeug nach einem der vorhergehenden Ansprüche, des Weiteren aufweisend zumindest ein weichmagnetisches Element und/oder zumindest ein elektrisch leitfähiges Element, die bzw. das an vorbestimmten Regionen entlang der zumindest einen Hauptspule (21, 22) und/oder der zumindest einen Umfangsspule (23, 24) angeordnet sind bzw. ist.

8. Verfahren zum Herstellen eines Formwerkzeugs nach einem der Ansprüche 1-7, aufweisend:
Bereitstellen (205) einer Form (10), die dazu eingerichtet ist, induktiv erwärmt zu werden, und die eine Kontaktoberfläche (11) und eine äußere Oberfläche (12) aufweist;
Bereitstellen (210, 215) zumindest einer Hauptspule (21, 22) und zumindest einer Umfangsspule (23, 24);
Anordnen (220) der zumindest einen Hauptspule (21, 22) in einem mäanderartigen Muster auf der äußeren Oberfläche (12) der Form (10), so dass ein durch die zumindest eine Hauptspule (21, 22) fließender elektrischer Wechselstrom größtenteils in alternierend entgegengesetzte Richtungen über die äußere Oberfläche (12) der Form (10) geleitet wird und dabei dem mäanderförmigen Muster folgt, wobei das durch den Strom erzeugte magnetische Feld dazu eingerichtet ist, Ströme in zumindest Teilen der zu erwärmenden Form (10) zu induzieren;
Anordnen (225) der zumindest einen Umfangsspule (23, 24) auf der äußeren oberfläche (12) der Form (10), so dass sie zumindest einen induktiv zu erwärmenden Bereich der Form (10) abgrenzt;
wobei die zumindest eine Hauptspule (21, 22) und die zumindest eine Umfangsspule (21, 22) Litzendrähte aufweisen, die von der Form (10) elektrisch isoliert sind und mit zumindest einem Verarbeitungsmittel (30) in betriebsmäßiger Verbindung stehen.

9. Verfahren nach Anspruch 8, des Weiteren aufweisend:
Anbringen (230, 235) der zumindest einen Hauptspule (21, 22) und der zumindest einen Umfangsspule (23, 24) an der äußeren Oberfläche (12) der Form (10) über ein Haftelement oder über eine Stützstruktur (13).

10. Verfahren nach Anspruch 8 oder 9, des Weiteren aufweisend:
Anordnen (240, 245) zumindest eines weichmagnetischen Elements und/oder zumindest eines elektrisch leitfähigen Elements an vorbestimmten Regionen entlang der zumindest einen Hauptspule (21, 22) und/oder der zumindest einen Umfangsspule (23, 24).

11. Verfahren zum Herstellen eines Verbundbauteils, aufweisend:
Bereitstellen (305) eines Formwerkzeugs (1) nach einem der Ansprüche 1-7;
Platzieren (310) eines Faser- und Kunststoffmaterials (110) auf die Kontaktoberfläche (11) der Form (10);
Verschließen (312) der Form (10);
Aufbringen (315) eines Verfestigungsdrucks auf das zu verarbeitende Material (110); und
induktives Erwärmen (320) der das Material (110) enthaltenden Form (10) gemäß einem vorbestimmten Zeit-Temperatur-Profil, um das Material (110) zu verfestigen und/oder auszuhärten, um das Verbundbauteil (A) herzustellen.

12. Verfahren nach Anspruch 11, wobei vor dem Aufbringen (315) eines Verfestigungsdrucks auf das zu bearbeitende Material (110) das Verfahren des Weiteren einen Schritt des Aufbringens (314) eines Vakuumdrucks auf das Material (110) aufweist.

13. Verfahren nach Anspruch 11 oder 12, wobei das Verfahren des Weiteren aufweist:
Kühlen (325) zumindest eines Teils des Formwerkzeugs (1) und/oder des hergestellten Bauteils (A); und
Entformen (330) des Bauteils (A) von dem Formwerkzeug (1).

14. Verfahren zum Herstellen eines Verbundbauteils, aufweisend:
Bereitstellen (305) eines Formwerkzeugs (1) nach einem der Ansprüche 1-7;
Platzieren (310) eines zu verarbeitenden Fasermaterials (110) auf der Kontaktoberfläche (11) der Form (10);
Verschließen (312) der Form (10);
Aufbringen (314) eines Vakuumdrucks und Infundieren (316) des Fasermaterials mit einem Kunststoffmaterial, wobei das Kunststoffmaterial einen Teil des zu verarbeitenden Materials (110) ausbildet;
induktives Erwärmen (320) der das Faser- und Kunststoffmaterial (110) enthaltenden Form (10) gemäß einem vorgegebenen Zeit-Temperatur-Profil, um ein Verbundbauteil (A) herzustellen.

15. Verfahren nach Anspruch 14, wobei das Verfahren des Weiteren aufweist:
Kühlen (325) zumindest eines Teils des Formwerkzeugs (1) und/oder des hergestellten Bauteils (A); und
Entformen (330) des Bauteils (A) von dem Formwerkzeug (1).

## Revendications

1. Outil de moulage pour produire une pièce composite à l'aide de chauffage par induction, comprenant :
un moule (10), ayant une surface de contact (11) adaptée pour être en contact avec un matériau (110) devant être transformé en pièce (A) composite, et une surface extérieure (12) ;
au moins une bobine principale (21, 22) agencée en un motif sinueux sur la surface extérieure (12) du moule (10), de sorte qu'un courant électrique alternatif circulant à travers l'au moins une bobine principale (21, 22) soit en majeure partie dirigé dans, en alternance, des directions opposées sur la surface extérieure (12) du moule (10), suivant le motif sinueux, dans lequel le champ magnétique généré par ledit courant est configuré pour induire des courants dans au moins des parties du moule (10) devant être chauffées ; et
au moins une bobine périphérique (23, 24) agencée sur la surface extérieure (12) du moule (10) et configurée pour délimiter au moins une zone du moule devant être chauffée par induction ;
dans lequel le moule (10) est configuré pour être chauffé par induction par l'au moins une bobine principale (21, 22) et l'au moins une bobine périphérique (23, 24) ; et
dans lequel l'au moins une bobine principale (21, 22) et l'au moins une bobine périphérique (23, 24) comprennent des fils qui sont isolés électriquement du moule (10) et en communication fonctionnelle avec au moins un moyen de traitement (30),
**caractérisé en ce que** les fils sont des fils de Litz.

2. Outil de moulage selon la revendication 1, dans lequel l'au moins une bobine principale (21, 22) et l'au moins une bobine périphérique (23, 24) sont fixées à la surface extérieure (12) du moule via un élément adhésif.

3. Outil de moulage selon la revendication 1, dans lequel l'au moins une bobine principale (21, 22) et l'au moins une bobine périphérique (23, 24) sont fixées à la surface extérieure (12) du moule (10) via une structure de soutien (13).

4. Outil de moulage selon la revendication 3, dans lequel la structure de soutien (13) est décalée du moule.

5. Outil de moulage selon l'une quelconque des revendications précédentes, dans lequel l'outil de moulage (1) est un outil en coquille ou un outil massif.

6. Outil de moulage selon l'une quelconque des revendications précédentes, dans lequel le moule (10) est au moins partiellement fait d'un matériau choisi dans un groupe constitué de : matériaux composites en fibre de carbone ou métaux.

7. Outil de moulage selon l'une quelconque des revendications précédentes, comprenant en outre au moins un élément faiblement magnétique et/ou au moins un élément électroconducteur agencés au niveau de régions prédéterminées le long de l'au moins une bobine principale (21, 22) et/ou l'au moins une bobine périphérique (23, 24).

8. Procédé de fabrication d'un outil de moulage selon l'une quelconque des revendications 1 à 7, comprenant :
la fourniture (205) d'un moule (10) configuré pour être chauffé par induction, ayant une surface de contact (11) et une surface extérieure (12) ;
la fourniture (210, 215) d'au moins une bobine principale (21, 22) et d'au moins une bobine périphérique (23, 24) ;
l'agencement (220) de l'au moins une bobine principale (21, 22) en un motif sinueux sur la surface extérieure (12) du moule (10), de sorte qu'un courant électrique alternatif circulant à travers l'au moins une bobine principale (21, 22) soit en majeure partie dirigé dans, en alternance, des directions opposées sur la surface extérieure (12) du moule (10), suivant le motif sinueux, dans lequel le champ magnétique généré par ledit courant est configuré pour induire des courants dans au moins des parties du moule (10) devant être chauffées ;
l'agencement (225) de l'au moins une bobine périphérique (23, 24) sur la surface extérieure (12) du moule (10), de façon à ce qu'elle délimite au moins une zone du moule (10) devant être chauffée par induction ;
dans lequel l'au moins une bobine principale (21, 22) et l'au moins une bobine périphérique (21, 22) comprennent des fils de Litz qui sont isolés électriquement du moule (10), et en communication fonctionnelle avec au moins un moyen de traitement (30).

9. Procédé selon la revendication 8, comprenant en outre :
la fixation (230, 235) de l'au moins une bobine principale (21, 22) et l'au moins une bobine périphérique (23, 24) à la surface extérieure (12) du moule (10) via un élément adhésif ou via une structure de soutien (13).

10. Procédé selon la revendication 8 ou 9, comprenant en outre :
l'agencement (240, 245) d'au moins un élément faiblement magnétique et/ou au moins un élément électroconducteur au niveau de régions prédéterminées le long de l'au moins une bobine principale (21, 22) et/ou l'au moins une bobine périphérique (23, 24).

11. Procédé de production d'une pièce composite, comprenant :
la fourniture (305) d'un outil de moulage (1) selon l'une quelconque des revendications 1 à 7 ;
le placement (310) d'un matériau (110) de fibre et de plastique sur la surface de contact (11) du moule (10) ;
la fermeture (312) du moule (10) ;
l'application (315) d'une pression de consolidation sur le matériau (110) devant être traité ; et
le chauffage par induction (320) du moule (10) contenant le matériau (110) conformément à un profil temps/température prédéterminé pour consolider et/ou faire durcir le matériau (110) pour produire la pièce (A) composite.

12. Procédé selon la revendication 11, dans lequel, avant d'appliquer (315) une pression de consolidation sur le matériau (110) devant être traité, le procédé comprend en outre une étape consistant à appliquer (314) une pression à vide sur le matériau (110).

13. Procédé selon les revendications 11 ou 12, dans lequel le procédé comprend en outre :
le refroidissement (325) d'au moins une partie de l'outil de moulage (1) et/ou de la pièce (A) produite ; et
le démoulage (330) de la pièce (A) de l'outil de moulage (1).

14. Procédé de production d'une pièce composite, comprenant :
la fourniture (305) d'un outil de moulage (1) selon l'une quelconque des revendications 1 à 7 ;
le placement (310) d'un matériau (110) de fibre devant être traité sur la surface de contact (11) du moule (10) ;
la fermeture (312) du moule (10) ;
l'application (314) d'une pression à vide et l'infusion (316) du matériau de fibre avec un matériau plastique, le matériau plastique formant ainsi une partie du matériau (110) devant être traité ;
le chauffage par induction (320) du moule (10) contenant le matériau (110) de fibre et de plastique conformément à un profil temps/température prédéterminé pour produire une pièce (A) composite.

15. Procédé selon la revendication 14, dans lequel le procédé comprend en outre :
le refroidissement (325) d'au moins une partie de l'outil de moulage (1) et/ou de la pièce (A) produite ; et
le démoulage (330) de la pièce (A) de l'outil de moulage (1).
